# EUROPEAN PATENT APPLICATION

(11) **EP 2 873 999 A1**
(43) Date of publication of application: **20.05.2015**
(21) Application number: 12864015.8
(22) Date of filing: 15.11.2012
(51) Int. Cl.: G02F 1/133, G06F 3/044

(54) **CAPACITIVE LIQUID CRYSTAL DISPLAY TOUCH PANEL**

(30) Priority: 29.06.2012 CN 201210224546
(71) Applicant: Shanghai Tianma Micro-Electronics Co., Ltd., 201201 Shanghai (CN)
(72) Inventor: MA, Jun, Shanghai 201201 (CN); WANG, Lihua, Shanghai 201201 (CN)
(74) Representative: Maiwald Patentanwalts GmbH
(86) International application number: PCT/CN2012/084654
(87) International publication number: WO 2014/000368

(57) **Abstract**

The invention discloses a capacitive touch LCD panel driven by IPS/FFS mode. The capacitive touch LCD panel includes: a first substrate (101); a second substrate (102) arranged opposite to the first substrate; a liquid crystal layer (103) disposed between the first substrate and the second substrate; and a capacitive touching unit (1011) disposed on a surface of the first substrate and toward the liquid crystal layer, the liquid crystal layer being formed of negative liquid crystal molecules. When the capacitive touch LCD panel is in operation, a permittivity of the liquid crystal layer will not change, and a parasitic capacitor will not change; therefore ground noise caused by the parasitic capacitor in the capacitive touching unit will be reduced so as to prevent touch inefficiency.

## Description

This application claims the priority of Chinese patent application No. 201210224546.6, entitled "CAPACITIVE TOUCH LCD PANEL", filed with the State Intellectual Property Office on June 29, 2012, which is incorporated herein by reference in its entirety.

### FIELD OF THE INVENTION

The invention relates to the field of liquid display, and particularly relates to a capacitive touch LCD (liquid crystal display) panel.

### BACKGROUND OF THE INVENTION

As an input medium, the touch screen is the most simple, convenient and natural human-machine interaction means at present. Therefore, touch screens are increasingly applied to various electronic products such as mobile phones, laptops, MP3/MP4s and so on. Depending on the various operation principles and touch information detecting medium, the touch screens may be classified into four types: resistive, capacitive, infrared and surface acoustic wave. The capacitive touch screen technology is predominant due to its simple manufacture process, long product life span and high transmittance.

In order to reduce costs of various electronic devices, and make the electronic devices thinner and lighter, the touch screen is generally integrated in a liquid crystal panel. One of the traditional methods that has a high integration level is described as below.

A touching control unit with a touching function is provided on a CF (Color Film) substrate of a liquid crystal display panel, and the liquid crystal display panel is driven by IPS (In-Plane Switching) or FFS (Fringe Field Switching) mode. Particularly, the touching control unit is directly disposed on a surface of a glass substrate of the CF substrate, and a color filter film of the CF substrate is disposed on a surface of the touching control unit. Thereby, a thinner and lighter LCD panel with a touching function can be obtained, finally to achieve a thinner and lighter electronic device.

However, the traditional touch LCD panel may have the problem of touch inefficiency.

### SUMMARY OF THE INVENTION

In view of this, an object of the invention is to provide a capacitive touch LCD panel, to solve the touch inefficiency problem of the traditional touch LCD panel.

The capacitive touch LCD panel is driven by IPS/FFS mode and includes:

a first substrate; a second substrate arranged opposite to the first substrate; a liquid crystal layer disposed between the first substrate and the second substrate; and a capacitive touching unit disposed on a surface of the first substrate and toward the liquid crystal layer; wherein the liquid crystal layer is formed of negative liquid crystal molecules.

Preferably, the negative liquid crystal molecules have a refractive index anisotropy value equal to or greater than 0.1.

Preferably, the negative liquid crystal molecules have a dielectric anisotropy less than -3.

Preferably, the negative liquid crystal molecules have a viscosity coefficient less than 150 mPa.s.

Preferably, the capacitive touching unit includes a first transparent electrode layer, an insulation layer and a second transparent electrode layer that are sequentially disposed on a surface of the first substrate.

Preferably, the first transparent electrode layer is an indium tin oxide layer or an indium zinc oxide layer.

Preferably, the second transparent electrode layer is an indium tin oxide layer or a silver zinc oxide layer.

Preferably, the first transparent electrode layer includes:
a plurality of driving electrodes, each of which is a rectangular electrode, the plurality of the driving electrodes forming a driving electrode matrix; and
a plurality of sensing electrodes, each of which is a bar-shaped electrode, the sensing electrodes being arranged between two columns adjacent to each other of the driving electrodes.

Preferably, the second transparent electrode layer includes a plurality of bridging electrodes, each of which respectively and electrically connects between two adjacent driving electrodes that are in a same row.

Preferably, the first transparent electrode layer includes:
a plurality of driving electrodes, each of which is a bar-shaped electrode, the driving electrodes being arranged in a grid shape.

Preferably, the second transparent electrode layer includes:
a plurality of sensing electrodes, each of which is a bar-shaped electrode, the sensing electrodes being arranged in a grid shape, the long axis of each of the sensing electrodes is intersected with and perpendicular to the long axis of each of the driving electrodes.

Preferably, a surface of the second transparent electrode is covered with a protective layer.

Preferably, a color filter film is disposed on a surface of the protective layer.

Preferably, a pixel unit array is disposed on a surface of the second substrate.

According to the above solutions, the liquid crystal layer in the capacitive touch LCD panel of the present invention is formed of negative liquid molecules. When the capacitive touch LCD panel is in operation, the long axis of each negative liquid crystal molecules rotates in a plane, each negative liquid crystal molecule does not rotate in the direction perpendicular to the display panel, so that the long axis of each negative liquid crystal molecule will always parallel to the display panel; therefore, the permittivity of the liquid crystal layer will not change. Moreover, the electrodes in the capacitive touching unit, the electrodes in an array substrate and the liquid crystal layer between the capacitive touching unit and the array substrate generate a parasitic capacitor, wherein the liquid crystal layer functions as a medium for the parasitic capacitor and the electrodes in the capacitive touching unit and the electrodes in the array substrate respectively function as one of the two terminals of the parasitic capacitor; therefore, ground noise may be generated in the capacitive touching unit if the parasitic capacitor changes. However, since the permittivity of the liquid crystal layer of the present invention will not change when the capacitive touch LCD panel of the present invention is in operation, so the parasitic capacitor will not change, thereby reducing the ground noise in the capacitive touching unit caused by the change of the parasitic capacitor, so as to prevent phenomenon of touch inefficiency.

Furthermore, since the liquid crystal layer applies negative liquid crystal molecules, the picture display quality and the light transmittance of the capacitive touch LCD panel are improved greatly.

### BRIEF DESCRIPTION OF THE DRAWINGS

In order to more clearly describe embodiments of the invention and technical solutions of the traditional technology, the appended drawings to be used in the description for the embodiments and technical solutions will be explained in brief. Apparently, the appended drawings to be described below are only some examples for the invention, and other drawings may be obtained by the skilled in the art according to these appended drawings without inventive works.
Figure 1 is a structural schematic diagram of a capacitive touch LCD panel according to an embodiment of the invention;
Figure 2 is a structural schematic diagram of another capacitive touch LCD panel according to an embodiment of the invention;
Figure 3 are simulation diagrams of the performance tests of the capacitive touch LCD panels according to the embodiments of the invention;
Figure 4 are light transmittances graphs of the capacitive touch LCD panel according to an embodiment of the invention and a capacitive touch LCD panel of the traditional technology; and
Figure 5 is a light transmittance graphs when the capacitive touch LCD panel according to an embodiment of the invention or a capacitive touch LCD panel of the traditional technology has or does not have a transparent conductive layer.

### DETAILED DESCRIPTION OF THE INVENTION

In order to make objects, technical solutions and advantages of embodiments of the invention to be clearer, the technical solutions according to the embodiments of the invention will be clearly and fully described in conjunction with the appended drawings below. Apparently, the described embodiments are only a part of embodiments and not all the embodiments of the invention. All other embodiments obtained by the skilled in the art without inventive works may fall within the protective scope of the invention.

As described in the background of the invention, the traditional touch LCD panel may affect the touch effect due to touch disorder.

The inventor found that an traditional LCD panel driven by IPS or FFS mode generally adopts a liquid crystal layer formed of positive liquid crystal molecules in order to pursue a higher responding speed. When the LCD panel is in operation, the long axis of each positive liquid crystal molecule rotates in the direction along the electric filed line. So when the LCD panel without a capacitive touching unit is in operation, although the rotation of the positive liquid crystal molecules may reduce the light transmittance of the display panel, the reduction is acceptable because the responding speed of the display panel predominates over the adverse impact on the display quality. However, since the orientation of the long axes of the liquid crystal molecules have a great influence on the permittivity of the liquid crystal layer; and in a LCD panel driven by the IPS or FFS mode and with a capacitive touching unit provided in its CF substrate: the electrodes in the capacitive touching unit, the electrodes in an array substrate and a liquid crystal layer between the capacitive touching unit and the array substrate may generate a parasitic capacitor, The change of a permittivity of the liquid crystal layer that functions as a medium for the parasitic capacitor, may greatly affect the value of the parastic capacitor, and may affect the electrodes in the capacitive touching unit that functions as an optional terminal for the parasitic capacitor, it will generate great ground noise in the capacitive touching unit and deteriorating the sensitivity of the capacitive touching unit. When the ground noise is great enough to cover up a normal touching signal, the phenomenon of touch inefficiency may occur.

The invention discloses a capacitive touch LCD panel driven by the IPS/FFS mode. The capacitive touch LCD panel includes:

a first substrate; a second substrate arranged opposite to the first substrate; a liquid crystal layer disposed between the first substrate and the second substrate; and a capacitive touching unit disposed on a surface of the first substrate and toward the liquid crystal layer; wherein the liquid crystal layer is formed of negative liquid crystal molecules.

According to the above technical solutions, the liquid crystal layer in the capacitive touch LCD panel according to the invention is formed of negative liquid crystal molecules. When the capacitive touch LCD panel is in operation, the long axis of each negative liquid crystal molecule rotates in a plane, each negative liquid crystal molecules does not rotate in the direction perpendicular to the display panel, so that the long axis of each negative liquid crystal molecule will always parallel to the display panel; therefore, the permittivity of the liquid crystal layer will not change. Moreover, the electrodes in the capacitive touch unit, the electrodes in an array substrate and the liquid crystal layer between the capacitive touch unit and the array substrate may generate a parasitic capacitor; the liquid crystal layer functions as a medium for the parasitic capacitor, and the electrodes in the capacitive touching unit and the electrodes in the array substrate respectively function as one of the two terminals for the parasitic capacitor, therefore, ground noise may be generated in the capacitive touching unit when the parasitic capacitor changes. However, since the permittivity of the liquid crystal layer of the present invention will not change when the capacitive touch LCD panel is in operation, so the parasitic capacitor will not change. Therefore, the ground noise in the capacitive touching unit caused by the change of the parasitic capacitor is reduced, so as to prevent the phenomenon of touch inefficiency.

Furthermore, since the liquid crystal layer applies negative liquid crystal molecules, the display quality and light transmittance of the capacitive touch LCD panel are improved greatly.

The above descriptions are core ideas of the invention. The technical solutions according to embodiments of the invention will be clearly, fully described in conjunction with the appended drawings of the embodiments. Apparently, the described embodiments are only a part of and not all embodiments of the invention. Based on the embodiments of the invention, all other embodiments obtained by the skilled in the art without an inventive work may fall within the protective scope of the invention.

A lot of details are described in the following so as to fully appreciate the invention; however, the invention may be implemented in other ways different the ways here described. The skilled in the art can do modifications to the invention without departing from the spirit of the invention; therefore, the invention is not limited to the embodiments below.

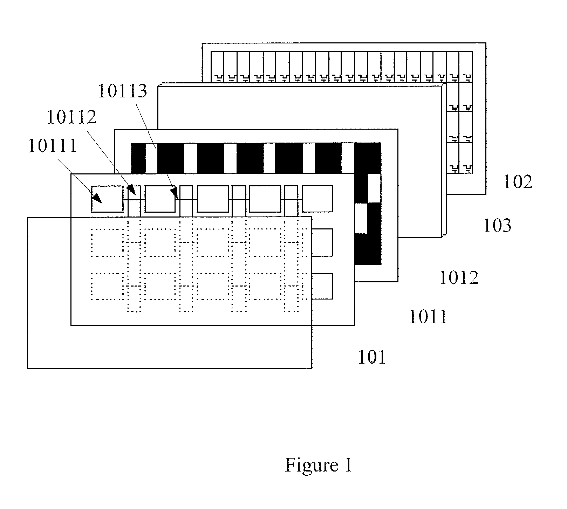

An embodiment of the invention discloses a capacitive touch LCD panel driven by the IPS/FFS mode. As shown in Figure 1, the capacitive touch LCD panel includes:

a first substrate101; a second substrate 102 arranged opposite to the first substrate; a liquid crystal layer 103 disposed between the first substrate 101 and the second substrate 102; and a capacitive touching unit 1011 disposed on a surface of the first substrate 101 and toward the liquid crystal layer 103.

Particularly, the capacitive touching unit 1011 includes:

a first transparent electrode layer, an insulation layer and a second transparent electrode layer that are sequentially disposed on the surface of the first substrate 101. The first transparent electrode layer is an indium tin oxide layer or an indium zinc oxide layer; and the second transparent electrode layer is an indium tin oxide layer or a silver zinc oxide layer.

More particularly, the first transparent electrode layer includes:
a plurality of driving electrodes 10111, each of which is a rectangular electrode, the plurality of driving electrodes 10111 forming a driving electrode matrix; and
a plurality of sensing electrodes 10112, each of which is a bar-shaped electrode, the plurality of sensing electrodes 10112 being arranged between two adjacent columns of the driving electrodes.

The second transparent electrode layer includes:
a plurality of bridging electrodes 10113, each of the bridging electrode 10113 respectively and electrically connects between two adjacent driving electrodes 10111 that are in a same row as the bridging electrode.

It should be noted that, Figure 1 is only a schematic diagram and does not indicate the actual scale. In order to explain the connection relation, each of the bridging electrodes 10113 is indicated by a line segment and is shown to be closer to the first substrate 101; however, in practice, the driving electrodes 10111 and the sensing electrodes 10112 are disposed on the surface of the first substrate 101.

Therefore, the driving electrodes 10111 in a same row are electrically connected with each other; as a resulat, the multiple rows of the driving electrodes receive a driving signal and scan the capacitive touching unit, meanwhile, change of capacitors is sensed by the sensing electrodes 10112 to generate an sensing signal.

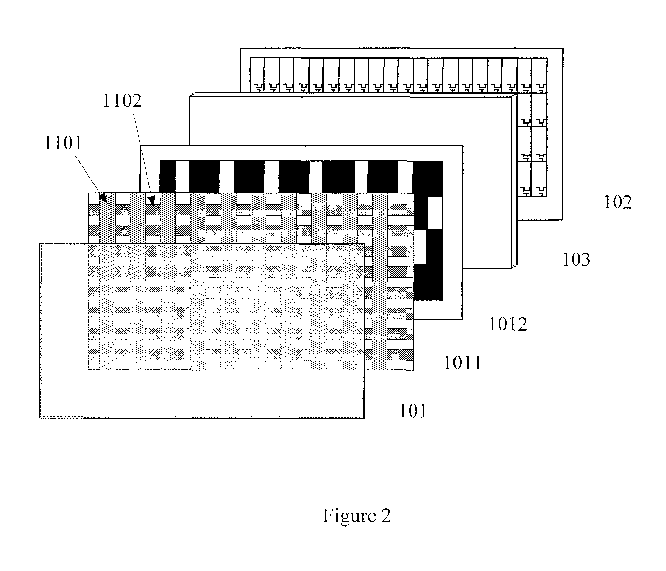

Alternatively, as shown in Figure 2, in more particular, the first transparent electrode layer includes:

a plurality of driving electrodes 1101, each of which is a bar-shaped electrode, the plurality of driving electrodes 1101 being arranged on the surface of the first substrate 101 in a grid shape.

The second transparent electrode layer includes:

a plurality of sensing electrodes 1102, each of which is a bar-shaped electrode, the sensing electrodes 1102 are arranged on the surface of the insulation layer in a grid shape, and the long axis of each of the sensing electrode 1102 is intersected with and perpendicular to the long axis of each of the driving electrodes.

Therefore, the multiple bar-shaped driving electrodes 1101 receive a driving signal and scan the capacitive touching unit; meanwhile, the change of the sensing capacitor is sensed by the sensing electrodes 1102 to generate an sensing signal.

It should be noted that, the driving electrodes and the sensing electrodes in the capacitive touching unit may be capacitors in other forms or shapes, as long as the capacitive touching unit is directly disposed on the surface of the first substrate 101 toward the liquid crystal layer 103.

A surface of second transparent electrode layer is covered with a protective layer and a color filter film 1012 is disposed on a surface of the protective layer. The protective layer is adapted to separate the capacitive touching unit from the color filter film, so as to protect the capacitive touching unit.

A pixel unit array is disposed on a surface of the second substrate 102. The pixel unit array consists of multiple pixel units each formed by the intersection of a data line and a scanning line, and each of the pixel units includes a pixel electrode, a common electrode and a thin film transistor. The data line and a scanning line are coupled to the pixel electrode via the thin film transistor.

Particularly, the data line is connected to a source electrode of the thin film transistor; the scanning line is connected to a grid electrode of the thin film transistor; and the pixel electrode is connected to a drain electrode of the thin film transistor. When the scanning line provides a scanning signal to the grid electrode, the source electrode and the drain electrode of the thin film transistor are electrically connected, therefore data signals provided by the data lines pass through the source electrode and the drain electrode in sequence to reach the pixel units, so as to control a horizontal electric field applied for controlling the rotation of liquid crystal and generated between the pixel electrode and the common electrode, further to control the rotating direction of the liquid crystal molecules in the liquid crystal layer 103, so as to to display

The liquid crystal layer 103 is formed of negative liquid crystal molecules, since the product of refractive index anisotropy Δn and a box thickness d is a constant and a square of the box thickness is proportional to a responding time t, i.e., d2∝t; so when the box thickness d is reduced, it is facilitate reducing the responding time and acquiring a good display effect, thereby, a preferred refractive index anisotropy value of the negative liquid crystal molecule is greater than or equal to 0.1. The dielectric anisotropy Δε is the difference between the dielectric constant in the direction of the long axis and the dielectric constant in the direction of the short axis of the liquid crystal molecule, which is a main parameter for determining behaviors of the liquid crystal molecules in an electric field. The more the difference is, the less the driving voltage is, i.e., the less a consumed power is; thereby, a preferred dielectric anisotropy Δε is less than -3. A viscosity coefficient directly affects the responding speed of the liquid crystal, and the less the viscosity coefficient is, the faster responding speed of the liquid crystal is; therefore, a preferred viscosity coefficient is less than 150mPa.s.

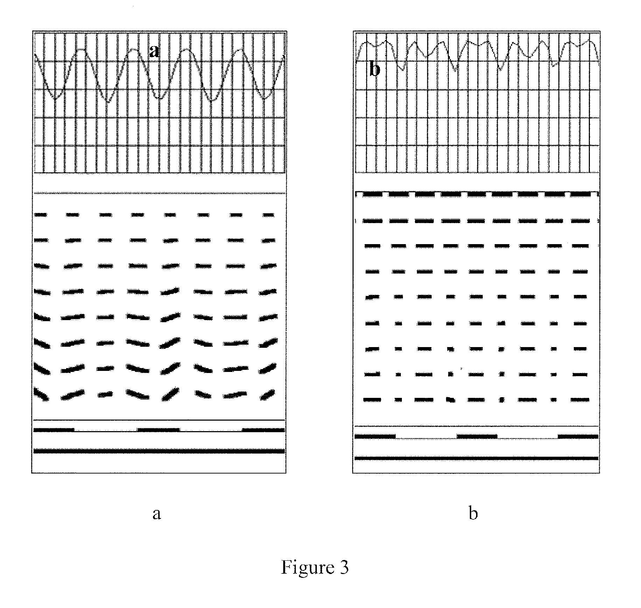

The inventor performs a simulation on the performance of the capacitive touch LCD panel adopting the FFS driving mode. Simulation results are shown in Figure 3; Figure 3a illustrates an traditional capacitive LCD panel adopting a liquid crystal layer formed of positive liquid crystal molecules; Figure 3b illustrates a capacitive LCD panel adopting the liquid crystal layer formed of negative liquid crystal molecules according to the present embodiment; wherein a same voltage is applied to both of them. As is shown in Figure 3a, under the action of the electric field, although the long axes of the positive liquid crystal molecules mainly rotate in a plane parallel to the panel, the long axes of the positive liquid crystal molecule may rotate with a certain magnitude in the direction perpendicular to the panel, causing a great change in the permittivity of the liquid crystal layer. Due to a parasitic capacitor formed by the array substrate, the capacitive touching unit and the liquid crystal layer, the change in the permittivity of the liquid crystal layer may affect the value of the parasitic capacitor, bringing great ground noise to the capacitive touching unit. As is shown in Figure 3b, under the action of the electric field, the long axes of the negative liquid crystal molecules only rotate in a plane parallel to the panel, i.e., the long axes of the negative liquid crystal molecule will always parallel to the panel. Due to no rotation of the long axes of the negative molecules in the direction perpendicular to the panel, the whole permittivity of the liquid crystal layer may not change and thereby the value of the parasitic capacitor may also not change. Therefore, the ground noise in the capacitive touching unit is reduced and phenomenon of touch inefficiency is avoided.

Furthermore, when the capacitive touching unit is in operation, an electric field perpendicular to the display panel will be generated between the capacitive touching unit and the array substrate, but this electric field perpendicular to the display panel is not needed for normal display. For the liquid crystal layer formed of positive liquid crystal molecules, the electric field causes rotation of the long axes of the positive liquid crystal molecules in a plane perpendicular to the display panel, causing a display disorder. However, for the liquid crystal layer formed of the negative liquid crystal molecules, as the long axes of the negative liquid crystal molecule will always parallel to the display panel and will not be affected by the electric field perpendicular to the display panel, the display disorder may not occur.

Additionally, as shown in Figure 3, according to a light transmission curve a in Figure 3a and a light transmission curve b in Figure 3b, the capacitive touch LCD panel according to an embodiment of the invention has a light transmittance always at a higher level and has a higher averaged light transmittance; while the light transmittance of the traditional capacitive touch LCD panel adopting the positive liquid crystal molecules may change in a greater range and its maximum value of light transmittance is less than the maximum value of the light transmittance of the capacitive touch LCD panel according to the embodiment of the invention. It could be concluded that the capacitive touch LCD panel according to the embodiment of the invention has a light transmittance greater than that of the traditional capacitive touch LCD panel adopting the positive liquid crystal molecules.

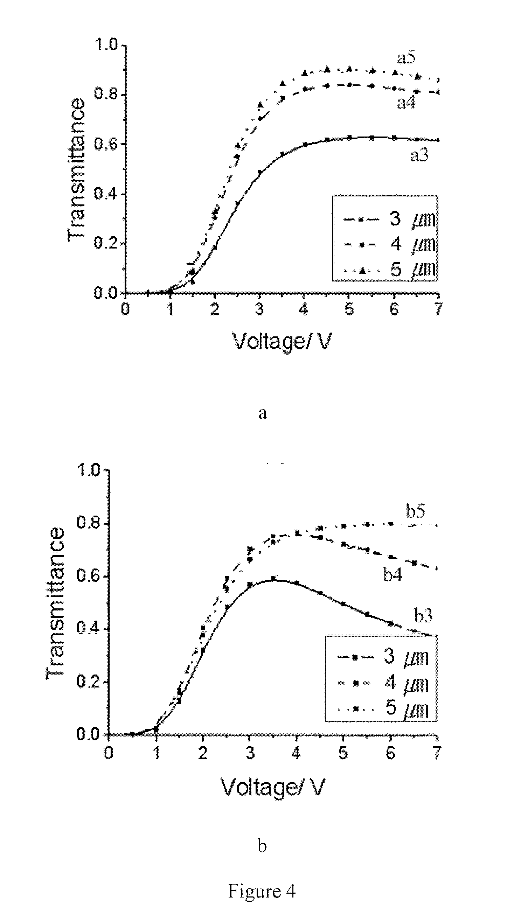

The inventor also performs light transmittance tests for the display panels with different thicknesses of liquid crystal layers. As shown in Figure 4, Figure 4a is a light transmittance graph for the capacitive touch LCD panel according to an embodiment of the invention, wherein the vertical axis Transmittance indicates light transmittance and the horizontal axis Voltage indicates applied voltage that has a unit of V. wherein the curve a3 is a light transmittance curve when the thickness of the liquid crystal layer is 3µm; the curve a4 is a light transmittance curve when the thickness of the liquid crystal layer is 4µm; and the curve a5 is a light transmittance curve when the thickness of the liquid crystal layer is 5µm. Figure 4b is a light transmittance graph for the traditional capacitive touch LCD panel adopting positive liquid crystal molecules, wherein the vertical axis Transmittance indicates light transmittance, and the horizontal axis Voltage indicates applied voltage that has a unit of V. wherein the curve b3 is a light transmittance curve when the thickness of the liquid crystal layer is 3µm, the curve b4 is a light transmittance curve when the thickness of the liquid crystal layer is 4µm and the curve b5 is a light transmittance curve when the thickness of the liquid crystal layer is 5µm. Comparing Figure 4a and Figure 4b, the light transmittance of the capacitive touch LCD panel according to the embodiment of the invention is obviously better than the light transmittance of the traditional capacitive touch LCD panel adopting positive liquid crystal molecules.

A transparent conductive layer is generally provided outside of a CF substrate of the traditional LCD panel driven by the IPS or FFS mode, so as to shield the liquid display panel from static electricity. According to an embodiment of the invention, the capacitive touching unit is disposed on the first substrate (i.e., the CF substrate), and when the LCD panel is in operation, electrodes in the capacitive touching unit are connected to the common electrodes of the array substrate, thereby the electrodes in the capacitive touching unit have a same electric potential as the common electrodes so as to prevent the influence of the static electricity and the transparent conductive layer on the surface of the first substrate may be omitted.

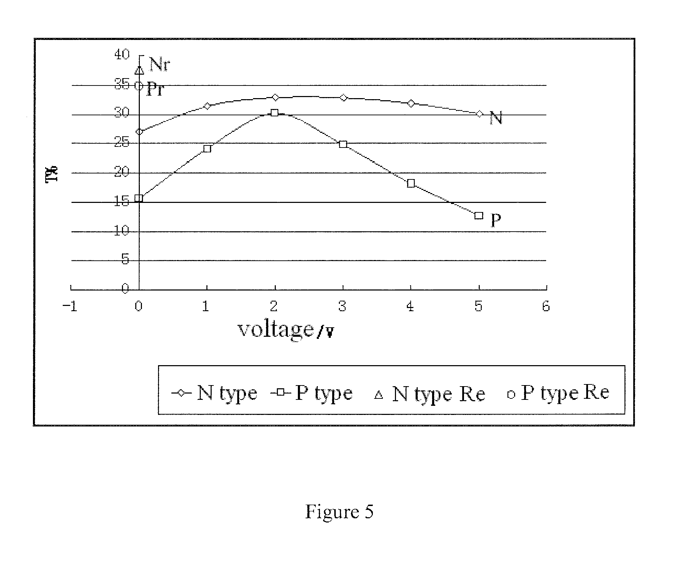

Furthermore, the inventor performs light transmittance tests for the capacitive touch LCD panel with a transparent conductive layer and the capacitive LCD without a transparent conductive layer. As shown in Figure 5, the vertical axis T% indicates light transmittance, and horizontal axis indicate the applied voltage that has a unit of V. As shown in Figure 5, dot Nr indicates a light transmittance of the capacitive touch LCD panel when it is powered off, that has a liquid crystal layer being formed of negative crystal molecules and without a transparent conductive layer being; and dot Pr indicates a light transmittance of the capacitive touch LCD panel when it is powered off, that has a liquid crystal layer being formed of positive crystal molecules and without a transparent conductive layer. Apparently, in capacitive touch LCD panels without a transparent conductive layer that are powered off, the display panel with a liquid crystal layer formed of negative liquid crystal molecules have a greater light transmittance than that of the display panel with a liquid crystal layer formed of positive liquid crystal molecules. Also, as shown in Figure 5, the curve N is for a light transmittance of the capacitive touch LCD panel with a liquid crystal layer formed of negative liquid crystal molecules and with a transparent conductive layer when a voltage ranges from 0 to 5V is applied to the capacitive touch LCD panel; the curve P is for a light transmittance of the capacitive touch LCD panel with a liquid crystal layer formed of positive liquid crystal molecules and with a transparent conductive layer when the applied voltage ranges from 0 to 5V. Apparently, in the capacitive touch LCD panel applied with a voltage and has a transparent conductive layer, the display panel with a liquid crystal layer formed of negative liquid crystal molecules has a greater light transmittance than that of the display panel with a liquid crystal layer formed of positive liquid crystal molecules.

The parts of the specification are described in a progressive way, the key points of each part are the difference from the other parts, and the sameness between one part and other parts may be referred by the other parts.

According to the description for the disclosed embodiments, the skilled in the art may achieve or use the invention. A number of modifications to those embodiments will be apparent to the skilled in the art, and the general principles defined herein may be realized in other embodiments without departing from the scope or spirit of the invention. Therefore, the invention is not limited to the embodiments shown herein, and is subject to the maximum range according to the principles and the novel characteristics.

## Claims

1. A capacitive touch liquid-crystal display (LCD) panel, driven by in-plane switching (IPS) mode or fringe field switching (FFS) mode, comprising:
a first substrate;
a second substrate arranged opposite to the first substrate;
a liquid crystal layer disposed between the first substrate and the second substrate; and
a capacitive touching unit disposed on a surface of the first substrate and toward the liquid crystal layer,
wherein the liquid crystal layer is formed of negative liquid crystal molecules.

2. The capacitive touch LCD panel according to claim 1, wherein the negative liquid crystal molecules have a refractive-index anisotropy value equal to or greater than 0.1.

3. The capacitive touch LCD panel according to claim 1, wherein the negative liquid crystal molecules have a dielectric anisotropy less than -3.

4. The capacitive touch LCD panel according to claim 1, wherein the negative liquid crystal molecules have a viscosity coefficient less than 150 mPa·s.

5. The capacitive touch LCD panel according to claim 1, wherein the capacitive touching unit comprises a first transparent electrode layer, an insulation layer and a second transparent electrode layer that are sequentially disposed on the surface of the first substrate.

6. The capacitive touch LCD panel according to claim 5, wherein the first transparent electrode layer is an indium tin oxide layer or an indium zinc oxide layer.

7. The capacitive touch LCD panel according to claim 5, wherein the second transparent electrode layer is an indium tin oxide layer or a silver zinc oxide layer.

8. The capacitive touch LCD panel according to claim 5, wherein the first transparent electrode layer comprises:
a plurality of driving electrodes, each of which is a rectangular electrode, the plurality of the driving electrodes forming a driving electrode matrix; and
a plurality of sensing electrodes, each of which is a bar-shaped electrode, each of the sensing electrodes being arranged between two adjacent columns of driving electrodes.

9. The capacitive touch LCD panel according to claim 8, wherein the second transparent electrode layer comprises a plurality of bridging electrodes, each of which respectively and electrically connects between two adjacent driving electrodes that are in the same row.

10. The capacitive touch LCD panel according to claim 5, wherein the first transparent electrode layer comprises a plurality of driving electrodes, each of which is a bar-shaped electrode, the driving electrodes being arranged in a grid shape.

11. The capacitive touch LCD panel according to claim 10, wherein the second transparent electrode layer comprises:
a plurality of sensing electrodes, each of which is a bar-shaped electrode, the sensing electrodes being arranged in a grid shape, and the long axis of each of the sensing electrodes being intersected with and perpendicular to the long axis of each of the driving electrodes.

12. The capacitive touch LCD panel according to claim 5, wherein a surface of the second transparent electrode is covered with a protective layer.

13. The capacitive touch LCD panel according to claim 12, wherein a color filter film is disposed on a surface of the protective layer.

14. The capacitive touch LCD panel according to claim 1, wherein a pixel unit array is disposed on the surface of the second substrate.
